# EUROPÄISCHE PATENTANMELDUNG

(11) **EP 3 002 399 A1**
(43) Veröffentlichungstag der Anmeldung: **06.04.2016**
(21) Anmeldenummer: 15179876.6
(22) Anmeldetag: 05.08.2015
(51) Int. Cl.: E05C 9/02, F16H 55/18

(54) **BESCHLAG FÜR FENSTER, TÜREN ODER DERGLEICHEN**

(30) Priorität: 02.10.2014 DE 102014114342
(71) Anmelder: MACO Technologie GmbH, 5020 Salzburg (AT)
(72) Erfinder: Covic, Dragan, 5020 Salzburg (AT)
(74) Vertreter: Manitz, Finsterwald & Partner GbR

(57) **Zusammenfassung**

Ein Beschlag für Fenster, Türen oder dergleichen umfasst ein Getriebe (14), welches ein zum Schalten des Beschlags um eine Rotationsachse (R) drehbares Eingangselement (16) und ein mit einer Treibstange gekoppeltes oder koppelbares, verschiebbares Ausgangselement (18) aufweist. Zum Umsetzen einer Drehbewegung des Eingangselements (16) in eine Verschiebebewegung des Ausgangselements (18) ist ein Zahnradabschnitt (20) am Eingangselement (16) vorgesehen, welcher mit einem am Ausgangselement (18) vorgesehenen Zahnstangenabschnitt (22) kämmt. Der Zahnradabschnitt (20) und der Zahnstangenabschnitt (22) umfassen jeweils wenigstens zwei voneinander getrennte Verzahnungsbereiche (30a, 30b, 32a, 32b), wobei die voneinander getrennten Verzahnungsbereiche (30a, 30b, 32a, 32b) jeweils bezüglich der Rotationsachse (R) hintereinander angeordnet sind und bezüglich des Verzahnungsverlaufs zueinander versetzt angeordnete Zähne aufweisen.

## Beschreibung

Die vorliegende Erfindung betrifft einen Beschlag für Fenster, Türen oder dergleichen, mit einem Getriebe, welches ein zum Schalten des Beschlags um eine Rotationsachse drehbares Eingangselement und ein mit einer Treibstange gekoppeltes oder koppelbares, verschiebbares Ausgangselement aufweist, wobei zum Umsetzen einer Drehbewegung des Eingangselements in eine Verschiebebewegung des Ausgangselements ein Zahnradabschnitt am Eingangselement vorgesehen ist, welcher mit einem am Ausgangselement vorgesehenen Zahnstangenabschnitt kämmt.

Derartige Beschläge werden beispielsweise als sogenannte Kantenverschlüsse in Falznuten von Fenster- oder Türflügeln eingesetzt. Zum Schalten des Beschlags, z.B. zwecks Verriegeln oder Entriegeln des Flügels gegenüber einem Blendrahmen, wird das Eingangselement mittels eines Betätigungselements wie eines Handgriffs oder Hebels gedreht. Das Getriebe setzt diese Drehbewegung in eine Verschiebebewegung einer Treibstange um, welche ihrerseits die Ver- oder Entriegelung des Flügels bewirkt. Eine Anordnung aus Zahnrad und Zahnstange ermöglicht hierbei eine besonders einfache Umsetzung zwischen Drehen und Verschieben. In diesem Sinne kann auch ein stangenartiges Bauteil, welches mit einer Reihe von Aussparungen versehen ist, einen Zahnstangenabschnitt bilden, wobei in diesem Fall die Stege zwischen den einzelnen Aussparungen als "Zähne" anzusehen sind.

Allerdings weisen einfache Anordnungen aus Zahnrad und Zahnstange im Allgemeinen ein deutlich spürbares Spiel auf. Ferner kommt es bei Beschlaggetrieben häufig zu einem als störend empfundenen "Ruckeln" sowie zu einer Geräuschentwicklung. Diesen Problemen kann durch eine entsprechend komplexe Getriebekonstruktion entgegengewirkt werden. Dies ist jedoch im Allgemeinen nicht mit den für Tür- und Fensterbeschläge akzeptablen Herstellungskosten vereinbar.

Der Erfindung liegt die Aufgabe zugrunde, auf einfache Weise eine verbesserte Bedienbarkeit von Beschlägen und insbesondere eine verbesserte Laufruhe der zugehörigen Getriebe zu ermöglichen.

Die Aufgabe wird durch einen Beschlag mit den Merkmalen des Anspruchs 1 gelöst.

Erfindungsgemäß umfassen der Zahnradabschnitt und der Zahnstangenabschnitt jeweils wenigstens zwei voneinander getrennte Verzahnungsbereiche, wobei die voneinander getrennten Verzahnungsbereiche jeweils bezüglich der Rotationsachse hintereinander angeordnet sind und bezüglich des Verzahnungsverlaufs zueinander versetzt angeordnete Zähne aufweisen. Der Verzahnungsverlauf erstreckt sich bei dem Zahnradabschnitt bezogen auf die Rotationsachse in einer Umfangsrichtung und bei dem Zahnstangenabschnitt linear in einer konstanten Richtung. Aufgrund der versetzten Zahnanordnung befindet sich stets entweder ein Zahn des ersten Verzahnungsbereichs oder ein Zahn des zweiten Verzahnungsbereichs des Zahnradabschnitts in weitgehend vollständigem Eingriff mit dem zugehörigen Zahnstangenabschnitt, sodass das Spiel des Getriebes minimiert und die Laufruhe verbessert wird. Ein weiterer Vorteil des Vorsehens mehrerer getrennter und zueinander versetzter Verzahnungsbereiche besteht in einer erhöhten mechanischen Festigkeit des Zahnradabschnitts und des Zahnstangenabschnitts.

Vorzugsweise weisen die voneinander getrennten Verzahnungsbereiche des Zahnradabschnitts den gleichen Radius und/oder die gleiche Zähnezahl auf. Das heißt der Zahnradabschnitt ist vorzugsweise durch zwei hinsichtlich der Verzahnungsparameter identische Zahnkränze oder Zahnkranzsegmente gebildet, welche lediglich in Umfangsrichtung zueinander versetzt sind. Dies ermöglicht eine besonders einfache Konstruktion. Prinzipiell könnten auch zwei verschiedene Zahnkränze am Eingangselement vorgesehen sein, solange die Verzahnungsbereiche des Zahnstangenabschnitts ebenfalls unterschiedlich gestaltet sind und zu den jeweiligen Zahnradabschnitten passen. Es hat sich gezeigt, dass das Versehen des Zahnradabschnitts und des Zahnstangenabschnitts jeweils mit zwei separaten Verzahnungsbereichen ausreicht, um eine akzeptable Laufruhe und ein ausreichend geringes Spiel zu erzielen. Bei Bedarf könnten jedoch auch mehr als zwei voneinander getrennte und zueinander versetzte Verzahnungsbereiche vorgesehen sein.

Es ist bevorzugt, dass die Zähne der voneinander getrennten Verzahnungsbereiche des Zahnradabschnitts und des Zahnstangenabschnitts jeweils um einen halben Zahnabstand zueinander versetzt sind. Somit ist in axialer Richtung gesehen jede Lücke des einen Verzahnungsbereichs durch einen Zahn des anderen Verzahnungsbereichs besetzt, sodass sich für das Getriebe eine optimale Laufruhe und ein minimiertes Spiel ergeben.

Eine Ausführungsform der Erfindung sieht vor, dass zwischen den voneinander getrennten Verzahnungsbereichen des Zahnradabschnitts ein Trennsteg angeordnet ist, wobei eine zwischen den voneinander getrennten Verzahnungsbereichen des Zahnstangenabschnitts angeordnete Nut eine Aufnahme für den Trennsteg bildet. Ebenso könnte zwischen den voneinander getrennten Verzahnungsbereichen des Zahnstangenabschnitts ein Trennsteg angeordnet sein, wobei eine zwischen den voneinander getrennten Verzahnungsbereichen des Zahnradabschnitts angeordnete Nut eine Aufnahme für den Trennsteg bildet. Der Eingriff des Trennsteges in die Nut ermöglicht eine verbesserte Führung des an der Zahnstange abrollenden Zahnrads, wodurch sich die Laufruhe des Getriebes weiter erhöht.

Vorzugsweise ist das Ausgangselement rechtwinklig zu der Rotationsachse des Eingangselements verschiebbar. Diese Konstellation eignet sich insbesondere für alle gängigen Beschlaggetriebe, welche eine Verschiebung von Treibstangenanordnungen entlang einer oder mehrerer Flügelkanten und eine Bedienung des Verschlusses von der Flügelseite aus vorsehen.

Der Zahnradabschnitt kann in das Eingangselement integriert sein. Das heißt das Eingangselement kann selbst als Zahnrad oder als Zahnradsegment ausgebildet sein. Dies ermöglicht einen besonders kompakten Getriebeaufbau. Insbesondere kann das Eingangselement einschließlich aller vorhandenen Verzahnungsbereiche als einstückiges Bauteil ausgeführt sein.

Gemäß einer bevorzugten Ausgestaltung ist der Zahnradabschnitt auf einen Winkelbereich von maximal ca. 180° beschränkt. Beispielsweise kann das Eingangselement als Zahnradsegment ausgebildet sein, welches im Längsschnitt nicht vollkreisförmig, sondern z.B. halbkreis- oder viertelkreisförmig ist. Dies ermöglicht eine Verringerung der Bauhöhe und insbesondere des Hinterdornmaßes des Beschlaggetriebes.

Das Eingangselement kann einen Kopplungsabschnitt für eine antriebswirksame Kopplung mit einem Betätigungselement des Beschlags, insbesondere mit einem Griff oder einem Hebel, aufweisen. Mittels eines mit dem Eingangselement gekoppelten Betätigungselements kann ein Benutzer in bekannter Weise den Beschlag bedienen, also z. B. einen Verschluss ver- oder entriegeln. Vorzugsweise ist der Kopplungsabschnitt für einen formschlüssigen Eingriff des Betätigungselements ausgelegt.

Der Kopplungsabschnitt kann eine Aufnahme für einen Vierkantstift umfassen. Viele gängige Betätigungselemente sind mit genormten abstehenden Vierkantstiften oder Vierkantdornen ausgestattet. Die Aufnahme für den Vierkantstift ist bevorzugt an die betreffenden Normmaße angepasst. Somit kann ein entsprechend gestaltetes Getriebe mit allen standardmäßigen Betätigungselementen verwendet werden.

Das Getriebe kann ein Gehäuse aufweisen, in welchem das Eingangselement drehbar gelagert und/oder das Ausgangselement verschiebbar geführt ist. Ein solches Gehäuse kann insbesondere fest mit einer Stulpschiene des Beschlags verbunden sein.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnung beschrieben.

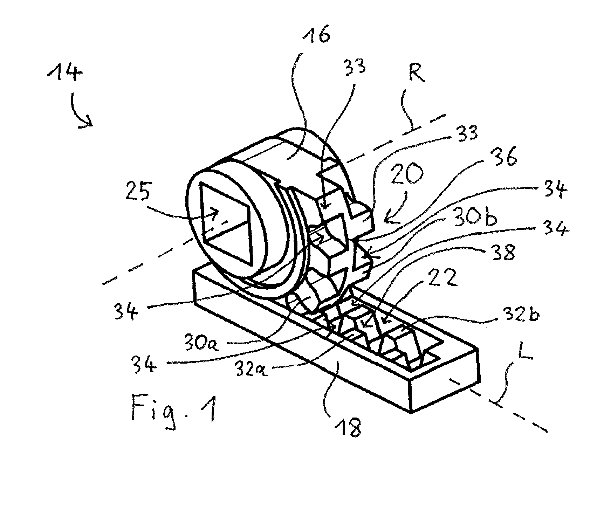

- Fig. 1: ist eine perspektivische Teilansicht eines erfindungsgemäßen Beschlags, welche das Zusammenwirken eines Eingangselements und eines Ausgangselements eines Getriebes des Beschlags zeigt.

Das in Fig. 1 gezeigte Getriebe 14 eines Beschlags für Fenster, Türen oder dergleichen umfasst ein Eingangselement in Form einer Getriebenuss 16 und eine verschiebbare Antriebsschiene 18, welche ein Ausgangselement des Getriebes 14 bildet. Die Getriebenuss 16 ist zum Schalten des Beschlags um eine Rotationsachse R drehbar in einem nicht dargestellten Getriebegehäuse gelagert und mit einem integrierten Zahnradabschnitt 20 versehen, welcher auf einen Winkelbereich von etwa 90° um die Rotationsachse R beschränkt ist. Die Getriebenuss 16 weist eine zentrale Vierkantaufnahme 25 auf, welche einen Kopplungsabschnitt für eine antriebswirksame Kopplung der Getriebenuss 16 mit einem Betätigungselement des Beschlags wie einem Griff oder einem Hebel bildet.

Die Antriebsschiene 18 ist lösbar oder dauerhaft mit einer nicht dargestellten Treibstange des Beschlags gekoppelt. Ferner ist an der Antriebsschiene 18 ein Zahnstangenabschnitt 22 angeordnet, in welchen der Zahnradabschnitt 20 eingreift. Eine Drehung der Getriebenuss 16 um die Rotationsachse R bewirkt somit ein Verschieben der Antriebsschiene 18 entlang ihrer Längsachse L, welche hier rechtwinklig zu der Rotationsachse R der Getriebenuss 16 verläuft. Vorzugsweise sind die Getriebenuss 16 und die Antriebsschiene 18 gleitend in dem Getriebegehäuse gelagert.

Wie in Fig. 1 erkennbar ist, umfassen der Zahnradabschnitt 20 und der Zahnstangenabschnitt 22 jeweils zwei voneinander getrennte, zahnkranzartige Verzahnungsbereiche 30a, 30b, 32a, 32b, welche jeweils bezüglich der Rotationsachse R hintereinander angeordnet sind und bezüglich des Verzahnungsverlaufs zueinander versetzt angeordnete Zähne 33 aufweisen. Der Versatz beträgt bei dem dargestellten Ausführungsbeispiel einen halben Zahnabstand, sodass jeder Zahn 33 des einen Verzahnungsbereichs 30a, 30b, 32a, 32b auf eine Lücke 34 des anderen Verzahnungsbereichs 30a, 30b, 32a, 32b trifft. Im Übrigen sind die voneinander getrennten Verzahnungsbereiche 30a, 30b, 32a, 32b hinsichtlich der Zahngeometrie identisch gestaltet. Bevorzugt weisen alle Verzahnungsbereiche 30a, 30b, 32a, 32b einen gleichmäßigen Zahnabstand auf.

In einer bezüglich der Rotationsachse R axialen Richtung gesehen ist zwischen den voneinander getrennten Verzahnungsbereichen 30a, 30b des Zahnradabschnitts 20 ein Trennsteg 36 angeordnet, welcher die Stabilität der Getriebenuss 16 erhöht. Dieser Trennsteg 36 greift beim Abrollen des Zahnradabschnitts 20 am Zahnstangenabschnitt 22 in eine zwischen den voneinander getrennten Verzahnungsbereichen 32a, 32b des Zahnstangenabschnitts 22 angeordnete Nut 38 ein.

Aufgrund der versetzten Zahnanordnung befindet sich stets ein Zahn 33 eines der Verzahnungsbereiche 30a, 30b des Zahnradabschnitts 20 in weitgehend vollständigem Eingriff mit dem zugehörigen Verzahnungsbereich 32a, 32b des Zahnstangenabschnitts 22, sodass das Getriebe 14 nur ein minimales Spiel und eine besonders hohe Laufruhe aufweist. Die Erfindung ermöglicht also auf einfache und kostengünstige Weise eine Erhöhung der Präzision von Beschlaggetrieben.

### Bezugszeichenliste

- 14: Getriebe
- 16: Getriebenuss
- 18: Antriebsschiene
- 20: Zahnradabschnitt
- 22: Zahnstangenabschnitt
- 25: Vierkantaufnahme
- 30a, 30b: Verzahnungsbereiche der Getriebenuss
- 32a, 32b: Verzahnungsbereiche der Antriebsschiene
- 33: Zahn
- 34: Lücke
- 36: Trennsteg
- 38: Nut

- R: Rotationsachse
- L: Längsachse

## Patentansprüche

1. Beschlag für Fenster, Türen oder dergleichen, mit einem Getriebe (14), welches ein zum Schalten des Beschlags um eine Rotationsachse (R) drehbares Eingangselement (16) und ein mit einer Treibstange gekoppeltes oder koppelbares, verschiebbares Ausgangselement (18) aufweist, wobei zum Umsetzen einer Drehbewegung des Eingangselements (16) in eine Verschiebebewegung des Ausgangselements (18) ein Zahnradabschnitt (20) am Eingangselement (16) vorgesehen ist, welcher mit einem am Ausgangselement (18) vorgesehenen Zahnstangenabschnitt (22) kämmt,
**dadurch gekennzeichnet, dass**
der Zahnradabschnitt (20) und der Zahnstangenabschnitt (22) jeweils wenigstens zwei voneinander getrennte Verzahnungsbereiche (30a, 30b, 32a, 32b) umfassen, wobei die voneinander getrennten Verzahnungsbereiche (30a, 30b, 32a, 32b) jeweils bezüglich der Rotationsachse (R) hintereinander angeordnet sind und bezüglich des Verzahnungsverlaufs zueinander versetzt angeordnete Zähne aufweisen.

2. Beschlag nach Anspruch 1,
**dadurch gekennzeichnet, dass**
die voneinander getrennten Verzahnungsbereiche (30a, 30b) des Zahnradabschnitts (20) den gleichen Radius und/oder die gleiche Zähnezahl aufweisen.

3. Beschlag nach Anspruch 1 oder 2,
**dadurch gekennzeichnet, dass**
die Zähne der voneinander getrennten Verzahnungsbereiche (30a, 30b, 32a, 32b) des Zahnradabschnitts (20) und des Zahnstangenabschnitts (22) jeweils um einen halben Zahnabstand zueinander versetzt sind.

4. Beschlag nach einem der vorstehenden Ansprüche,
**dadurch gekennzeichnet, dass**
zwischen den voneinander getrennten Verzahnungsbereichen (30a, 30b) des Zahnradabschnitts (20) ein Trennsteg (36) angeordnet ist, wobei eine zwischen den voneinander getrennten Verzahnungsbereichen (32a, 32b) des Zahnstangenabschnitts (22) angeordnete Nut (38) eine Aufnahme für den Trennsteg (36) bildet.

5. Beschlag nach einem der vorstehenden Ansprüche,
**dadurch gekennzeichnet, dass**
das Ausgangselement (18) rechtwinklig zu der Rotationsachse (R) des Eingangselements (16) verschiebbar ist.

6. Beschlag nach einem der vorstehenden Ansprüche,
**dadurch gekennzeichnet, dass**
der Zahnradabschnitt (20) in das Eingangselement (16) integriert ist.

7. Beschlag nach einem der vorstehenden Ansprüche,
**dadurch gekennzeichnet, dass**
der Zahnradabschnitt (20) auf einen Winkelbereich von maximal ca. 180° beschränkt ist.

8. Beschlag nach einem der vorstehenden Ansprüche,
**dadurch gekennzeichnet, dass**
das Eingangselement (16) einen Kopplungsabschnitt (25) für eine antriebswirksame Kopplung mit einem Betätigungselement des Beschlags, insbesondere mit einem Griff oder einem Hebel, aufweist.

9. Beschlag nach Anspruch 8,
**dadurch gekennzeichnet, dass**
der Kopplungsabschnitt (25) eine Aufnahme für einen Vierkantstift umfasst.

10. Beschlag nach einem der vorstehenden Ansprüche,
**dadurch gekennzeichnet, dass**
das Getriebe (14) ein Gehäuse aufweist, in welchem das Eingangselement (16) drehbar gelagert und/oder das Ausgangselement (18) verschiebbar geführt ist, wobei, bevorzugt, das Gehäuse fest mit einer Stulpschiene des Beschlags verbunden ist.
